# EUROPEAN PATENT SPECIFICATION

(11) **EP 2 569 368 B1**
(45) Date of publication and mention of the grant of the patent: **14.06.2017**
(21) Application number: 11717143.9
(22) Date of filing: 20.04.2011
(51) Int. Cl.: C08L 23/14, C09J 123/14

(54) **ADHESION PROMOTER SYSTEM, AND METHOD OF PRODUCING THE SAME**
ADHÄSIONSPROMOTORSYSTEM UND HERSTELLUNGSVERFAHREN DAFÜR
SYSTÈME DE PROMOTEUR D'ADHÉSION ET SON PROCÉDÉ DE FABRICATION

(30) Priority: 10.05.2010 US 332986 P
(43) Date of publication of application: 20.03.2013
(73) Proprietor: Dow Global Technologies LLC, Midland, MI 48674 (US)
(72) Inventor: HOFMANN, Sandra, CH-8840 Einsiedeln (CH); DIEHL, Charles F., Blue Bell, PA 19422 (US); MALOTKY, David L., Midland, MI 48640 (US); READ, Michael D., Midland, MI 48642 (US)
(74) Representative: Boult Wade Tennant
(86) International application number: PCT/US2011/033249
(87) International publication number: WO 2011/142949

(56) References cited:
- WO-A1-2005/100501
- WO-A1-2005/105941
- WO-A1-2011/094005
- WO-A2-2007/146875
- US-A1- 2004 176 541
- US-A1- 2006 084 764
- US-A1- 2010 059 178

## Description

### Cross-Reference to Related Applications

### Field of Invention

The instant invention relates to an adhesion promoter system, and method of producing the same.

### Background of the Invention

Different techniques have been employed to facilitate the paintability of certain low surface energy plastic substrates such as thermoplastic polyolefins ("TPO"). Such techniques have, for example, largely been employed in the automotive industry such as automotive exterior painting applications, e.g. car bumpers, and automotive interior painting applications, e.g. instrument panels. Furthermore, there are a number of additional non-automotive applications, which require good adhesion of a topcoat to polypropylene substrates, for example, packaging applications, geotextiles applications, aquaculture, sporting goods, appliances, consumer electronics, furniture, marine, roofing membranes and toys.

Adhesion promoters can also be employed as a sizing agent for glass fibers used in producing glass fiber reinforced polypropylene or TPO or to provide for adhesion between natural fibers and a PP or TPO substrate to enable reinforcement..

Typically, an adhesion promoter is employed to enhance the adhesion properties between different layers. Such adhesion layers may be applied as a separate layer, a formulated primer layer, or a blend component in a basecoat or primer formulation. The coatings applied can be solvent-based or waterborne; however, in the latter case, typically at least some surface activation treatment is required, for example, flame treatment, plasma treatment, or corona treatment. For solvent-based systems the key unmet needs is to provide for a low cost material with chlorine-free being regarded as a benefit.

Currently available waterborne options fail to provide adequate and acceptable water jet resistance as well as chemical resistance, particularly in the absence of surface activation treatment of the TPO or PP substrate. Furthermore, the currently available options fail to address concerns associated with chlorine containing adhesion promoter formulations.

Despite the research efforts in producing improved adhesion promoter formulation, there is still a need for a chlorine free adhesion promoter system with improved properties; and furthermore, there is still a need for a method for making such chlorine free adhesion promoter systems with improved properties at reduced costs. The adhesion promoter systems of the present invention provide chlorine free adhesion promoter systems with improved adhesion properties without interfering with other properties.

WO 2005/100501 A1 discloses an article comprising (a) a functionalized component selected from the group consisting of functionalized polymers, functionalized oligomers and beta nucleating agents, and (b) an olefin polymer comprising one or more C3 to C40 olefins, wherein the olefin polymer has a Dot T-Peel of 1 N or more on Kraft paper, a Mw of 10,000 to 100,000, a branching index of 0.95 or less measured at the Mz of the polymer, and a heat of fusion of 1 to 70 J/g, and wherein the Gardner color of the adhesive does not change by more than 7 Gardner units when the adhesive has been heat aged at 180°C for 48 hours as compared to the Gardner color of the unaged composition.

### Summary of the Invention

The instant invention is an adhesion promoter system, and method of producing the same.

In one embodiment, the instant invention provides an adhesion promoter system comprising an aqueous dispersion comprising the melt kneaded product of: at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight (a heat of fusion in the range of from 2 Joules/gram to 50 Joules/gram) as measured via DSC, and a melting point in the range of 25° C to 110° C as measured via DSC; from 0.5 to less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition, from 0.1 to less than 20 percent by weight of a stabilizing agent, based on the total weight of the solid content; and in the presence of water and optionally one or more neutralizing agents; wherein said dispersion has an average particle size diameter in the range of from 0.05 to 5 pm.

In another alternative embodiment, the instant invention further provides an adhesion layer comprising a film derived from the adhesion promoter system according with any of the preceding embodiments.

In another alternative embodiment, the instant invention further provides a multilayer structure comprising: (a) at least one or more substrate layers; (b) at least one or more adhesion layers, wherein said one or more adhesion layers comprise a film derived from the adhesion promoter system according with any of the preceding embodiments; (c) at least one or more outer layers; wherein said adhesion layer is disposed therebetween said one or more substrate layers and said one or more outer layers.

In another alternative embodiment, the instant invention further provides a coating formulation comprising at least the adhesion promoter system, as described hereinabove.

In another alternative embodiment, the instant invention further provides a coating layer comprising a film derived from the coating formulation, as described hereinabove.

In another alternative embodiment, the instant invention further provides a multilayer structure comprising: (a) at least one or more substrate layers; (b) at least one or more coating layers comprising a film derived from the coating formulation, as described hereinabove; and (c) optionally one or more outer layers.

In another alternative embodiment, the instant invention further provides a process for making a multilayer structure comprising the steps: (1) selecting a at least one or more substrate layers; (2) selecting the adhesion promoter system according with any of the preceding embodiments; (3) applying said adhesion promoter system to at least one surface of said substrate layer; (4) removing at least a portion of the water; (5) thereby forming an adhesion layer associated with said substrate layer; (6) forming at least one or more outer layers on said adhesion layer; and (7) thereby forming a multilayer structure.

In another alternative embodiment, the instant invention further provides a process for making a multilayer structure comprising the steps: (1) selecting a at least one or more substrate layers; (2) selecting a coating formulation, as described hereinabove; (3) applying said coating formulation to at least one surface of said substrate layer; (4) removing at least a portion of the water; (5) thereby forming a coating layer associated with said substrate layer; (6) optionally forming one or more outer layers on said coating layer; and (7) thereby forming a multilayer structure.

In an alternative embodiment, the instant invention provides a composition, method of producing the same, articles made therefrom, and method of making such articles, in accordance with any of the preceding embodiments, except that the adhesion promoter system further comprises one or more fillers, one or more binders, one or more pigments, one or more film forming aids, one or more crosslinking agents, one or more conductivity enhancer agents, one or more rheology modifying agents,

In an alternative embodiment, the instant invention provides a composition, method of producing the same, articles made therefrom, and method of making such articles, in accordance with any of the preceding embodiments, except that the functionalized polymer composition is obtained by a process comprising (a) reacting a propylene/hexene copolymer having a terminal unsaturation with maleic anhydride in a mole ratio of 1:1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 5 to 45 weight percent, based on the weight of functionalized polymer composition.

### Detailed Description of the Invention

The instant invention is an adhesion promoter system, and method of producing the same.

The adhesion promoter system according to the present invention comprises an aqueous dispersion comprising the melt kneading product of: (a) at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight, a heat of fusion in the range of from 2 Joules/gram to 50 Joules/gram), and a DSC melting point in the range of 25° C to 110° C; (b) from 0.5 to less than 40 percent by weight of a functionalized polymer composition , based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition; (c) from 0.1 to less than 20 percent by weight of a stabilizing agent, based on the total weight of the solid content; and (d) in the presence of water and optionally one or more neutralizing agents, for example, at a temperature in the range of 25° C to 200° C.

The adhesion promoter system may comprise at least 20 percent by weight of the dispersion, based on the weight of the adhesion promoter system. All individual values and subranges from at least 20 weight percent are included herein and disclosed herein; for example, the adhesion promoter system may comprise at least 30 percent by weight of the dispersion, based on the weight of the adhesion promoter system; or in the alternative, the adhesion promoter system may comprise at least 40 percent by weight of the dispersion, based on the weight of the adhesion promoter system; or in the alternative, the adhesion promoter system may comprise at least 50 percent by weight of the dispersion, based on the weight of the adhesion promoter system; or in the alternative, the adhesion promoter system may comprise at least 55 percent by weight of the dispersion, based on the weight of the adhesion promoter system; or in the alternative, the adhesion promoter system may comprise at least 65 percent by weight of the dispersion, based on the weight of the adhesion promoter system; or in the alternative, the adhesion promoter system may comprise at least 75 percent by weight of the dispersion, based on the weight of the adhesion promoter system.

The adhesion promoter system may further comprise one or more coalescing agents, wetting agents, thickeners, flow aids, pigments, resins, biocides, film forming aids, conductivity enhancers, or cross-linking systems. The adhesion promoter system may be applied to the surface of a substrate as a separate layer or it may be incorporated into a coating system.

The aqueous dispersion may comprise from at least 60 percent by weight of a base polymer, as described hereinbelow in further details, based on the total weight of the solid content. All individual values and subranges from at least 60 weight percent are included herein and disclosed herein; for example, the weight percent of the base polymer can be from a lower limit of 60, 70, 75, 80, 85, 90, or 95 weight percent to an upper limit of 70, 75, 80, 85, 90, 95 or 100 weight percent. For example, the aqueous dispersion may comprise from 60 to 95 percent, or 70 to 90 percent, or 75 to 95 percent, or 80 to 99 percent, or 85 to 99 percent, or 90 to 100 percent by weight of the base polymer, based on the total weight of the solid content.

The aqueous dispersion may optionally comprise from less 40 percent by weight of a functionalized polymer composition, as described hereinbelow in further details, based on the total weight of the solid. All individual values and subranges from less than 40 weight percent are included herein and disclosed herein; for example, the weight percent of the functionalized polymer composition can be from a lower limit of 0, 5, 10, 15, 20, 30, or 35 weight percent to an upper limit of 5, 10, 15, 20, 30, or 40 weight percent. For example, the aqueous dispersion may comprise from 0 to 35 percent, or 0 to 30 percent, or 0 to 25 percent, or 0 to 15 percent, or 5 to 15 percent, or 0 to 10 percent by weight of the functionalized polymer composition, based on the total weight of the solid content.

The aqueous dispersion may comprise at least 5 percent by weight of solid content, excluding the weight of any filler, based on the total weight of the aqueous dispersion. All individual values and subranges of at least 5 weight percent are included herein and disclosed herein; for example, the weight percent can be from a lower limit of 5,10,20, 30, 40, 50, 55, 60, 65, 70, 75, or 80 weight percent to an upper limit of 45, 50, 55, 60, 65, 70, 75, 80 or 85 weight percent. For example, the aqueous dispersion may comprise at least 10 percent, or at least 20 percent, or at least 30 percent, or at least 40 percent, or at least 45 percent, or at least 50 percent, or at least 55 percent, or at least 60 percent, or at least 65 percent, or at least 70 percent by weight of solid content, excluding the weight of any filler, based on the total weight of the aqueous dispersion.

The aqueous dispersion may have an average particle size diameter in the range of less than 100 µm; for example, less than 50 µm; or in the alternative, less than 25 µm; or in the alternative from 0.05 to 25 µm; or in the alternative, from 0.05 to 10 µm; or in the alternative, from 0.05 to 5 µm.

The aqueous dispersion may have a pH in the range of less than 12; for example, from 7.5 to 11; or in the alternative, from 8 to 11; or in the alternative, from 8 to 10.

### Base Polymer

The aqueous dispersion comprises from at least 60 percent by weight of the units derived from a base polymer, based on the total weight of the solid content; for example, at least 70 weight percent; or in the alternative, at least 80 weight percent; or in the alternative, at least 90 weight percent. The base polymer comprises a polyolefin composition; for example, a propylene/alpha-olefin copolymer composition such as a propylene/ethylene copolymer composition. The propylene/alpha-olefin copolymer composition may optionally further comprise one or more polymers, e.g. a random copolymer polypropylene (RCP). In one particular embodiment, the propylene/alpha-olefin copolymer is characterized as having substantially isotactic propylene sequences. "Substantially isotactic propylene sequences" means that the sequences have an isotactic triad (mm) measured by ¹³C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by ¹³C NMR spectra.

The propylene/alpha-olefin copolymer may have a melt flow rate in the range of from 0.1 to 500 g/10 minutes, measured in accordance with ASTM D-1238 (at 230° C / 2.16 Kg). All individual values and subranges from 0.1 to 500 g/10 minutes are included herein and disclosed herein; for example, the melt flow rate can be from a lower limit of 0.1 g/10 minutes, 0.2 g/10 minutes, or 0.5 g/10 minutes to an upper limit of 500 g/10 minutes, 200 g/10 minutes, 100 g/10 minutes, or 25 g/10 minutes. For example, the propylene/alpha-olefin copolymer may have a melt flow rate in the range of 0.1 to 200 g/10 minutes; or in the alternative, the propylene/ alpha-olefin copolymer may have a melt flow rate in the range of 0.2 to 100 g/10 minutes; or in the alternative, the propylene/ alpha-olefin copolymer may have a melt flow rate in the range of 0.2 to 50 g/10 minutes; or in the alternative, the propylene/ alpha-olefin copolymer may have a melt flow rate in the range of 0.5 to 50 g/10 minutes; or in the alternative, the propylene/ alpha-olefin copolymer may have a melt flow rate in the range of 1 to 50 g/10 minutes; or in the alternative, the propylene/ alpha-olefin copolymer may have a melt flow rate in the range of 1 to 40 g/10 minutes; or in the alternative, the propylene/ alpha-olefin copolymer may have a melt flow rate in the range of 1 to 30 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method, as described above. The propylene/alpha-olefin copolymer comprises units derived from propylene and polymeric units derived from one or more alpha-olefin comonomers. Exemplary comonomers utilized to manufacture the propylene/alpha-olefin copolymer are C₂, and C₄ to C₁₀ alpha-olefins; for example, C₂, C₄, C₆ and C₈ alpha-olefins.

The propylene/alpha-olefin copolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™. In one embodiment, the propylene/alpha-olefin copolymers are further characterized as comprising (A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a C₄-₁₀ α-olefin; and containing an average of at least 0.001, preferably an average of at least 0.005 and more preferably an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Paten Application No. PCT/US08/082599.

### Functionalized Polymer Composition

The functionalized polymer provides for adhesion to the subsequent basecoat, top-coat, ink. Maleic functionality can react with many resins having free hydrogen functionalities: for example alkyds, acrylics, polyurethanes, epoxies, polyesters, polyamides, silicones.

The aqueous dispersion comprises from less than 40 percent by weight of the units derived from a functionalized polymer composition, based on the total weight the solid content; for example, less than 30 weight percent; or in the alternative, less than 20 weight percent; or in the alternative, less than 10 weight percent. The functionalized polymer composition comprises a polypropylene i.e. homopolymers and copolymers of polypropylene and one or more alpha olefins such as ethylene, hexene, and octene, with high amounts of succinic anhydride attached which does not materially affect the physical properties of the polypropylene, and hydrolysis derivatives thereof.. When the term "polypropylene" is used herein, it is intended to cover homopolymers and copolymers of polypropylene. For instance, comonomers used include, but are not necessarily limited to, ethylene, hexene, octene. A key to the method described herein is the use of succinic terminated polypropylene formed via the ene reaction onto vinylidene terminated polypropylene. This polypropylene is often, but not exclusively, prepared by metallocene catalysis. It has been discovered that grafting maleic anhydride onto this polymer does not result in significant chain scission or polymerization. In one non-limiting embodiment the method involves heating maleic anhydride in the presence of a polypropylene that has been formed using a metallocene catalyst in such a way that a single terminal vinylidene group results on each molecule. Most commonly these metallocene polymerizations are done in the presence of hydrogen (which speeds up the polymerization and lowers the molecular weight of the polymer) which results in polymer not having the terminal vinylidene group. These saturated polymers will not work in the inventive method, and thus the polymerization of propylene in the presence of a metallocene catalyst is preferably carried out in the presence of very little or no hydrogen or other transfer agents, such as triethylsilane. The ene reaction is shown schematically below:

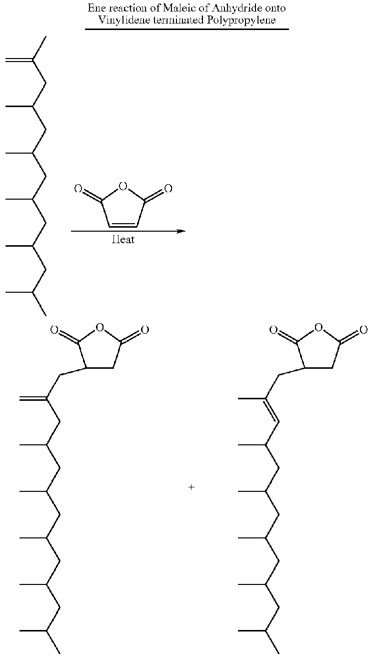

Any form of polypropylene may be used; for example syndiotactic, hemisyndiotactic, isotactic, hemiisotactic, and atactic polypropylene. The polypropylene may be made by a wide variety of transition metal catalysts.

Additional grafting of more maleic anhydride onto the above grafted polymers does not essentially effect the double bonds. All of the maleic anhydride is added to the backbone of the polypropylene. This is shown schematically below:

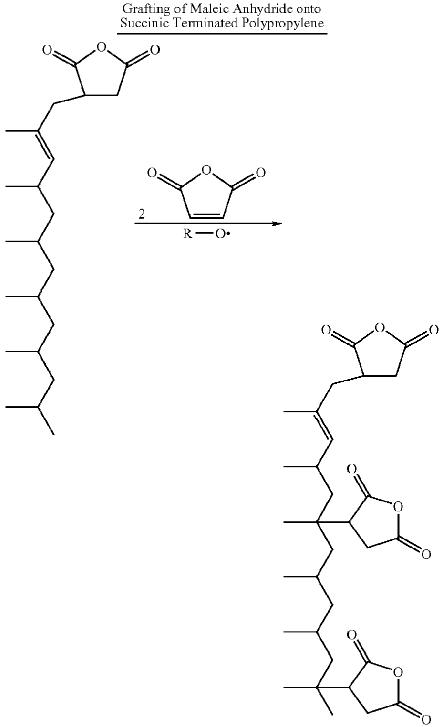

While levels of maleic anhydride incorporation below 5 weight percent are certainly possible, the described method herein facilitates the achieving of higher levels of total maleic anhydride incorporation, on the order of about 5 to about 45 weight percent, alternatively from about 10 to about 45 weight percent.

In one non-limiting embodiment of process, in the ene reaction, one molar equivalent of polypropylene (having a terminal unsaturation) is reacted with about one molar equivalent of maleic anhydride. Heating is applied, but this is generally simply enough necessary to make the polypropylene molten so that the reactants may be mixed.

In another non-restrictive embodiment of the process, in the further addition of maleic anhydride, the polypropylene having a terminal succinic anhydride moiety and a single unsaturation from the ene reaction is combined with additional maleic anhydride in the presence of free radical initiation. The free radical initiation may be any of the commonly used forms of free radical initiation including, but not necessarily limited to, peroxides, photoinitiation through ultraviolet radiation, gamma radiation, metal complexes and combinations thereof. In one non-limiting embodiment of the invention, the peroxide initiator is di-t-butyl peroxide.

When the further addition of maleic anhydride is performed neat, it is necessary to heat the mixture to at least a molten state to permit mixing of the reactants. The reaction temperature will depend on the radical source and polymer melting point and may range from about 60° C to about 200° C. Both steps of the process may be conducted at ambient pressure. Since maleic anhydride is volatile at higher temperatures, the reaction may be conducted in a sealed vessel.

In another non-restrictive embodiment of the process, the polypropylene having a terminal succinic anhydride moiety and a single unsaturation may be dissolved in a solvent and the heating during mixing may be reduced or eliminated. Suitable solvents for the polypropylene reactant include, but are not necessarily limited to, toluene, xylenes and mixtures thereof.

The molecular weight (Mₙ) of the product polypropylene substituted with maleic anhydride may range from about 500 up about 150,000 daltons, alternatively up to about 50,000 daltons, in another non-limiting embodiment up to about 10,000 daltons, and in another non-restrictive embodiment from 600 to about 5000 Daltons.

In one embodiment, the second functionalized polymer has a melting point in the range of 50 to 130° C; for example, 50 to 120° C, or 50 to 115° C, or 50 to 110° C, or 50 to 100° C.

In one embodiment, the second functionalized polyolefin is obtained by a process comprising (a) reacting a propylene/hexene copolymer having a terminal unsaturation with maleic anhydride in a mole ratio of 1:1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said second functionalized polyolefin, wherein said second functionalized polyolefin has a succinic anhydride substitution in the range of from 5 to 45 weight percent, based on the weight of second functionalized polyolefin.

Such functionalized polymers are further described in US patent application nos. 2006/0084764 and 2005/0203255, and US Patent No. 7,183,359.

### Stabilizing Agent

The aqueous dispersion according to the present invention further comprises at least one or more stabilizing agents to promote the formation of a stable dispersion. The stabilizing agent may preferably be an external stabilizing agent. The aqueous dispersion of the instant invention comprises 1 to 50 percent by weight of one or more stabilizing agents, based on the total weight of the solid content of the dispersion. All individual values and subranges from 1 to 50 weight percent are included herein and disclosed herein; for example, the weight percent can be from a lower limit of 1, 3, 5, 10 weight percent to an upper limit of 15, 25, 35 , 45, or 50 weight percent. For example, the aqueous dispersion may comprise from 1 to 25, or in the alternative from 1 to 35, or in the alternative from 1 to 40, or in the alternative from 1 to 45 percent by weight of one or more stabilizing agents, based on the total weight of the solid content of the aqueous dispersion. In selected embodiments, the stabilizing agent may be a surfactant, a polymer, or mixtures thereof. In certain embodiments, the stabilizing agent may be one or more second functionalized polymer compositions, as described hereinabove. In certain embodiments, the stabilizing agent can be a polar polymer, having a polar group as either a comonomer or grafted monomer. In exemplary embodiments, the stabilizing agent comprises one or more polar polyolefins, having a polar group as either a comonomer or grafted monomer. Exemplary polymeric stabilizing agents include, but are not limited to, ethylene-acrylic acid (EAA) and ethylene-methacrylic acid copolymers, such as those available under the trademarks PRIMACOR^{™}, commercially available from The Dow Chemical Company, NUCREL^{™}, commercially available from E.I. DuPont de Nemours, and ESCOR™, commercially available from ExxonMobil Chemical Company and described in U.S. Patent Nos. 4,599,392, 4,988,781, and 5,938,437. Other exemplary polymeric stabilizing agents include, but are not limited to, ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other stabilizing agents that may be used include, but are not limited to, long chain fatty acids, fatty acid salts, or fatty acid alkyl esters having from 12 to 60 carbon atoms. In other embodiments, the long chain fatty acid or fatty acid salt may have from 12 to 40 carbon atoms.

The stabilizing agent as well as the functionalized polymer composition may each be partially or fully neutralized with a neutralizing agent. In certain embodiments, neutralization of the stabilizing agent and/or the functionalized polymer composition may be from 25 to 250 percent on a molar basis; or in the alternative, it may be from 50 to 110 percent on a molar basis. For example, the neutralizing agent may be a base, such as ammonium hydroxide or potassium hydroxide, for example. Other neutralizing agents can include lithium hydroxide or sodium hydroxide, for example. In another alternative, the neutralizing agent may, for example, be a carbonate. In another alternative, the neutralizing agent may, for example, be any amine such as monoethanolamine, or 2-amino-2-methyl-1-propanol (AMP). Amines useful in embodiments disclosed herein may include monoethanolamine, diethanolamine, triethanolamine, and TRIS AMINO (each available from Angus), NEUTROL TE (available from BASF), as well as triisopropanolamine, diisopropanolamine, and N,N-dimethylethanolamine (each available from The Dow Chemical Company, Midland, MI). Other useful amines may include ammonia, monomethylamine, dimethylamine, trimethylamine, monoethylamine, diethylamine, triethylamine, mono-n-propylamine, dimethyl-n propylamine, N-methanol amine, N-aminoethylethanolamine, N-methyldiethanolamine, monoisopropanolamine, N,N-dimethyl propanolamine, 2-amino-2-methyl-1-propanol, tris(hydroxymethyl)-aminomethane, N,N,N'N'-tetrakis(2-hydroxylpropyl) ethylenediamine, 1.2-diaminopropane. In some embodiments, mixtures of amines or mixtures of amines and surfactants may be used. Those having ordinary skill in the art will appreciate that the selection of an appropriate neutralizing agent depends on the specific composition formulated, and that such a choice is within the knowledge of those of ordinary skill in the art.

Additional stabilizing agents that may be useful in the practice of the present invention include, but are not limited to, cationic surfactants, anionic surfactants, or non-ionic surfactants. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants. Stabilizing agents useful in the practice of the present invention can be either external surfactants or internal surfactants. External surfactants are surfactants that do not become chemically reacted into the base polymer during dispersion preparation. Examples of external surfactants useful herein include, but are not limited to, salts of dodecyl benzene sulfonic acid and lauryl sulfonic acid salt. Internal surfactants are surfactants that do become chemically reacted into the base polymer during dispersion preparation. An example of an internal surfactant useful herein includes 2,2-dimethylol propionic acid and its salts. Additional surfactants that may be useful in the practice of the present invention include cationic surfactants, anionic surfactants, non-ionic surfactants, or combinations thereof. Various commercially available surfactants may be used in embodiments disclosed herein, including: OP-100 (a sodium stearate), OPK-1000 (a potassium stearate), and OPK-181 (a potassium oleate), each available from RTD Hallstar; UNICID 350, available from Baker Petrolite; DISPONIL FES 77-IS and DISPONIL TA-430, each available from Cognis; RHODAPEX CO-436, SOPROPHOR 4D384, 3D-33, and 796/P, RHODACAL BX-78 and LDS-22, RHODAFAC RE-610, and RM-710, and SUPRAGIL MNS/90, each available from Rhodia; and TRITON QS-15, TRITON W-30, DOWFAX 2A1, DOWFAX 3B2, DOWFAX 8390, DOWFAX C6L, TRITON X-200, TRITON XN-45S, TRITON H-55, TRITON GR-5M, TRITON BG-10, and TRITON CG-110, each available from The Dow Chemical Company, Midland, Michigan.

### Fluid Medium

The aqueous dispersion further comprises a fluid medium. The fluid medium may be any medium; for example, the fluid medium may be water. The dispersion of the instant invention comprises 35 to 85 percent by weight of fluid medium, based on the total volume of the dispersion. In particular embodiments, the water content may be in the range of from 35 to 80, or in the alternative from 35 to 75, or in the alternative from 45 to 65 percent by weight, based on the total weight of the dispersion. Water content of the dispersion may preferably be controlled so that the solids content (base polymer plus stabilizing agent) is between about 1 percent to about 80 percent by weight. In particular embodiments, the solids range may be between about 10 percent to about 75 percent by weight. In other particular embodiments, the solids range is between about 20 percent to about 70 percent by weight. In certain other embodiments, the solids range is between about 25 percent to about 60 percent by weight.

### Additional components

The aqueous dispersion according to the present invention may further comprise optionally one or more binder compositions such as acrylic latex, vinyl acrylic latex, styrene acrylic latex, vinyl acetate ethylene latex, optionally, one or more other waterborne binder systems such a polyurethane dispersions , epoxy dispersions, alkyd dispersions, or hybrid dispersions of these type polymers, optionally one or more fillers; optionally one or more additives; optionally one or more pigments, e.g. titanium dioxide, mica, calcium carbonate, silica, zinc oxide, milled glass, aluminum trihydrate, talc, antimony trioxide, fly ash, and clay; optionally conductive fillers like carbon black; optionally one or more co-solvents, e.g. glycols, glycol ether such as Dowanol™ TPnB (Tripropylene Glycol n-Butyl Ether), DPnB (Dipropylene Glycol n-Butyl Ether), DPM (Dipropylene Glycol Methyl Ether), DPMA (Dipropylene Glycol Methyl Ether Acetate), PGDA (Propylene Glycol Diacetate), PM (Propylene Glycol Methyl Ether), PMA (Propylene Glycol Methyl Ether Acetate), PnB (Propylene Glycol n-Butyl Ether), PnP (Propylene Glycol n-Propyl Ether), PPh (Propylene Glycol Phenyl Ether), TPM (Tripropylene Glycol Methyl Ether), Proglyde DMM (Dipropylene Glycol Dimethyl Ether), Butyl Cellosolve, Butyl Carbitol, Butyl Carbitol Acetate, Hexyl Cellosolve, Hexyl Carbitol, all available from The Dow Chemical Company or other glycol ethers as available as trademark TEXANOL from ExxonMobil, other solvents such as toluene, xylene, AROMATIC100, N-propyl propionate, N-butyl propionate, N-pentyl propionate, mixtures thereof, and combinations thereof. Such solvents are commercially available, for example from ExxonMobil under the tradename AROMATIC 100, and from The Dow Chemical Company under the tradename UCAR N-Alkyl Propionates; others like 2,2,4-trimethyl-1,3-pentanediol monoisobutyrate, alcohols, mineral spirits, and benzoate esters;

Optionally one or more dispersants, e.g. aminoalcohols, and polycarboxylates; optionally one or more surfactants; optionally one or more defoamers; optionally one or more anti-foaming agents e.g. under the tradename Surfynol by Air Products or Tego Foamex by Evonik or BYK by BYK or others or combinations thereof; optionally one or more preservatives, e.g. biocides, mildewcides, fungicides, algaecides, and combinations thereof; optionally one or more thickeners, e.g. cellulosic based thickeners such as hydroxyethyl cellulose, hydrophobically modified alkali soluble emulsions (HASE thickeners such as UCAR POLYPHOBE TR-116) and hydroobically modified ethoxylated urethane thickeners (HEUR); or optionally one or more additional neutralizing agents, e.g. hydroxides, amines, ammonia, and carbonates;

Optionally one or more wetting agents, for instance fluorosurfactants as available under the tradename TEGO from Evonik or Novec from 3M or Zonyl from DuPont or other hydrocarbon surfactants such as TRITON QS-15, TRITON W-30, DOWFAX 2A1, DOWFAX 3B2, DOWFAX 8390, DOWFAX C6L, TRITON X-200, TRITON XN-45S, TRITON H-55, TRITON GR-5M, TRITON BG-10, and TRITON CG-110, available by The Dow Chemical Company.

### Additional Colorant Components

Embodiments of the present invention may also employ a colorant as part of the aqueous dispersion. A variety of colors may be used. Examples include colors such as yellow, magenta, and cyan. As a black coloring agent, carbon black, and a coloring agent toned to black using the yellow/magenta/cyan coloring agents shown below may be used. Colorants, as used herein, include dyes, pigments, and predispersions, among others. These colorants may be used singly, in a mixture, or as a solid solution. In various embodiments, pigments may be provided in the form of raw pigments, treated pigments, pre-milled pigments, pigment powders, pigment presscakes, pigment masterbatches, recycled pigment, and solid or liquid pigment predispersions. As used herein, a raw pigment is a pigment particle that has had no wet treatments applied to its surface, such as to deposit various coatings on the surface. Raw pigment and treated pigment are further discussed in PCT Publication No. WO 2005/095277 and U.S. Patent Application Publication No. 20060078485. In contrast, a treated pigment may have undergone wet treatment, such as to provide metal oxide coatings on the particle surfaces. Examples of metal oxide coatings include alumina, silica, and zirconia. Recycled pigment may also be used as the starting pigment particles, where recycled pigment is pigment after wet treatment of insufficient quality to be sold as coated pigment.

Exemplary colorant particles include, but are not limited to, pigments such as yellow coloring agent, compounds typified by a condensed azo compound, an isoindolynone compound, an anthraquinone compound, an azometal complex methine compound, and an allylamide compound as pigments may be used. As a magenta coloring agent, a condensed azo compound, a diketopyrrolopyrrole compound, anthraquinone, a quinacridone compound, a base dye lake compound, a naphthol compound, a benzimidazolone compound, a thioindigo compound, and a perylene compound may be used. As a cyan coloring agent, a copper phthalocyanine compound and its derivative, an anthraquinone compound, a base dye lake compound, may be used.

### Forming the Aqueous Dispersion

The aqueous dispersion according to the present invention can be formed by any number of methods recognized by those having skill in the art. In one embodiment, one or more base polymers, one or more functionalized polymer compositions, and one or more stabilizing agents, as described hereinabove, are melt-kneaded in an extruder along with water and optionally a neutralizing agent, such as ammonia, potassium hydroxide, or a combination of the two or more to form an aqueous dispersion. In another embodiment, one or more base polymers and one or more functionalized polymer compositions are compounded, and then the base polymer/one or more functionalized polymer compositions compound is melt-kneaded in an extruder in the presence of a stabilizing agent, water, and optionally one or more neutralizing agents to form an aqueous dispersion. In some embodiments, the dispersion is first diluted to contain about 1 to about 5 percent by weight water and then, subsequently, further diluted to comprise greater than about 25 percent by weight water.

Any melt-kneading means known in the art may be used. In some embodiments, a kneader, a BANBURY^{®} mixer, single-screw extruder, or a multi-screw extruder, e.g. a twin screw extruder, is used. A process for producing the aqueous dispersion in accordance with the present invention is not particularly limited. For example, an extruder, in certain embodiments, for example, a twin screw extruder, is coupled to a back pressure regulator, melt pump, or gear pump. Exemplary embodiments also provide a base reservoir and an initial water reservoir, each of which includes a pump. Desired amounts of base and initial water are provided from the base reservoir and the initial water reservoir, respectively. Any suitable pump may be used, but in some embodiments, for example, a pump that provides a flow of about 150 cc/min at a pressure of 240 bar is used to provide the base and the initial water to the extruder. In other embodiments, a liquid injection pump provides a flow of 300 cc/min at 200 bar or 600 cc/min at 133 bar. In some embodiments, the base and initial water are preheated in a preheater.

One or more base polymers, in the form of pellets, powder, or flakes, are fed from the feeder to an inlet of the extruder where the resin is melted or compounded. One or more one or more functionalized polymer compositions are fed simultaneously with one or more base polymers into the extruder via the feeder; or in the alternative, one or more functionalized polymer compositions are compounded into one or more base polymers, and then fed into the extruder via the feeder. In some embodiments, the stabilizing agent is added to one or more base polymers through and along with the resin and in other embodiments, the stabilizing agent is provided separately to the twin screw extruder. The resin melt is then delivered from the mix and convey zone to an emulsification zone of the extruder where the initial amount of water and optional base from the water and base reservoirs are added through an inlet. In some embodiments, stabilizing agent may be added additionally or exclusively to the water stream. In some embodiments, further dilution water may be added via water inlet from water reservoir in a dilution and cooling zone of the extruder. Typically, the dispersion is diluted to at least 30 weight percent water in the cooling zone. In addition, the diluted mixture may be diluted any number of times until the desired dilution level is achieved. In some embodiments, water is not added into the twin screw extruder but rather to a stream containing the resin melt after the melt has exited from the extruder. In this manner, steam pressure build-up in the extruder is eliminated and the dispersion is formed in a secondary mixing device such as a rotor stator mixer.

In one embodiment, the present invention further provides a method for producing an adhesion promoter system comprising the steps of: (1) selecting at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight, a heat of fusion in the range of from 2 Joules/gram to 50 Joules/gram), and a DSC melting point in the range of 25° C to 110° C; (2) selecting from 0.5 to less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition; (3) selecting from 0.1 to less than 20 percent by weight of a stabilizing agent, based on the total weight of the solid content; (4) melt blending said base polymer and said functionalized polymer composition in the presence of water and optionally one or more neutralizing agents, for example, at a temperature in the range of from 25° C to 200° C; and (5) thereby forming said adhesion promoter system.

### End-use Applications

The adhesion promoter system of the present invention may be used, for example, in different coating applications, e.g. automotive coating applications, as an adhesion promoter for certain low surface energy plastic substrates such as thermoplastic polyolefins ("TPO").

The adhesion promoter system may be applied to one or more surfaces of a substrate, an article, or a structure via any method. Such methods include, but are not limited to, spraying, dipping, rolling, printing, and any other conventional technique generally known to those skilled in the art. The adhesion promoter system may be applied as coating to one or more surfaces of a substrate, an article, or a structure at a temperature in the range of greater than about 5° C; for example, in the range of 25° C to 400° C; or in the alternative, it can be used as a sizing agent for substrates such as glass fibers to produce glass fiber reinforced polypropylene or TPO or as an adhesion promoter to provide for adhesion between natural fibers such as Cellulosics and a PP or TPO substrate to enable reinforcement. Such substrates include, but are not limited to, thermoplastic polyolefins ("TPO"), and glass fiber reinforced polypropylene substrate or natural fiber reinforced PP or TPO. The inventive adhesion promoter system may be used as adhesion promoting layer for auto interior applications such as instrument panel, auto exterior applications such as bumpers, or other non automotive applications such as in packaging, toys, leisure, aquaculture, geotextiles, sporting goods, appliances, consumer electronics, furniture, marine, roofing membranes and toys.

Such coated substrates may further be coated with a topcoat, such as paint. The inventive adhesion promoter system may be used adhesion promoting layer for auto interior applications such as instrument panel, auto exterior applications such as bumper fascia, or combinations thereof. The inventive adhesion promoter system is applied to one or more surfaces of a substrate, an article, or a structure, and then a topcoat is applied. The topcoat may be applied after an intermediate baking step, i.e. removing at least a portion of the water; or in the alternative, the topcoat may be applied without the intermediate baking step. In the alternative, the inventive adhesion promoter system is applied to one or more surfaces of a substrate, an article, or a structure, and then at least a portion of the water is removed before a topcoat is applied. A clear coat may further be applied after the topcoat is at least partially dried. In the alternative, the adhesion promoter system may be admixed with a topcoat, and then, the admixture may be applied to one or more surfaces of a substrate, an article, or a structure.

In one embodiment, the adhesion promoter system forms an adhesion layer, i.e. a film, which is associated with one or more surfaces of a substrate, an article, or a structure. The adhesion layer may have a thickness in the range of 1 to 30 µm; for example 5 to 15 µm.

In another alternative embodiment, a multilayer structure comprises: (a) at least one or more substrate layers; (b) at least one or more adhesion layers, wherein said one or more adhesion layers comprise a film derived from the adhesion promoter system; (c) at least one or more outer layers; wherein said adhesion layer is disposed therebetween said one or more substrate layers and said one or more outer layers.

In another alternative embodiment, the instant invention further provides a coating formulation comprising at least the adhesion promoter system, as described hereinabove.

In another alternative embodiment, the instant invention further provides a coating layer comprising a film derived from the coating formulation, as described hereinabove.

In another alternative embodiment, the instant invention further provides a multilayer structure comprising: (a) at least one or more substrate layers; (b) at least one or more coating layers comprising a film derived from the coating formulation, as described hereinabove; and (c) optionally one or more outer layers.

In another alternative embodiment, the instant invention further provides a process for making a multilayer structure comprising the steps: (1) selecting at least one or more substrate layers; (2) selecting the adhesion promoter system, as described hereinabove; (3) applying said adhesion promoter system to at least one surface of said substrate layer; (4) removing at least a portion of the water; (5) thereby forming an adhesion layer associated with said substrate layer; (6) forming at least one or more outer layers on said adhesion layer; and (7) thereby forming a multilayer structure.

In another alternative embodiment, the instant invention further provides a process for making a multilayer structure comprising the steps: (1) selecting at least one or more substrate layers; (2) selecting a coating formulation, as described hereinabove; (3) applying said coating formulation to at least one surface of said substrate layer; (4) removing at least a portion of the water; (5) thereby forming a coating layer associated with said substrate layer; (6) optionally forming one or more outer layers on said coating layer; and (7) thereby forming a multilayer structure.

### Examples

The following examples illustrate the present invention but are not intended to limit the scope of the invention.

### Inventive Examples 1-7

Inventive Examples 1-7 were prepared according to the following procedure. A Berstorff ZE25 UTX extruder with 48 L/D rotating at 500 rpm was employed to prepare the aqueous dispersion components of each inventive adhesion promoter system of Inventive Example 1-7. The formulation components for each aqueous dispersion are reported in Table I. The base polymer, the functionalized polymer composition, and polymeric stabilizing agent were supplied to the feed throat of the extruder via a Schenck Mechatron loss-in-weight feeder. The non-polymeric stabilizing agents were delivered into the barrel after the water was added. The base polymer, the functionalized polymer composition, and polymeric stabilizing agent were melted blended, and then emulsified in the presence of water, and optionally a neutralizing agent. In the alternative, the base polymer and the functionalized polymer composition were melted blended, and then emulsified in the presence of water, non-polymeric stabilizing agent and optionally a neutralizing agent. The emulsion phase was then conveyed forward to the dilution and cooling zone of the extruder where additional water was added to form the aqueous dispersions having solid level contents in the range of from less than 60 weight percent. The properties of each of the dispersion components of the inventive Examples 1-7 were measured, and were reported in Table II. Additional water was added as the emulsion phase was conveyed down the length of the extruder where it was combined with more water to dilute it down to final solid levels of less than 60 weight percent. The base (if present), initial water, non-polymeric stabilizing agent (if present), and dilution water were all supplied by Isco dual syringe pumps (500 ml). The barrel temperature of the extruder was set to 150° C. After the dispersion exited the extruder, it was further cooled and filtered via a 200 µm mesh size bag filter.

### Comparative Example 1

Comparative Example 1 was prepared according to the following procedure. A Berstorff ZE25 UTX extruder with 48 L/D rotating at 500 rpm was employed to prepare the aqueous dispersion components of the comparative adhesion promoter system of Comparative Example 1. The formulation components for each aqueous dispersion are reported in Table I. The base polymer was supplied to the feed throat of the extruder via a Schenck Mechatron loss-in-weight feeder. The non-polymeric stabilizing agent was delivered into the barrel after the water was added. The base polymer was melted, and then emulsified in the presence of water, and the non-polymeric stabilizing agent. The emulsified phase was then conveyed forward to the dilution and cooling zone of the extruder where additional water was added to form the aqueous dispersion having solid level contents in the range of from less than 60 weight percent. The properties of the dispersion component of the Comparative Example 1 were measured, and were reported in Table II. Additional water was added as the emulsified phase was then conveyed down the length of the extruder where it was combined with more water to dilute it down to final solid levels of less than 60 weight percent. The initial water, non-polymeric stabilizing agent, and dilution water were all supplied by Isco dual syringe pumps (500 ml). The barrel temperature of the extruder was set to 150° C. After the dispersion exited the extruder, it was further cooled and filtered via a 200 µm mesh size bag filter.

### Adhesion Promoter Performance Testing

Inventive Example 4 and 5, i.e. adhesion promoter systems including dispersion components 4 and 5, as described above were further formulated by adding a coalescing agent Tripropylene Glycol N-butyl Ether (TPnB) commercially available from The Dow Chemical Company. The dispersions were diluted to have a solid level content of 35 weight percent, and additional 8 weight percent (wet/wet) of the coalescent agent was added to form the adhesion promoter systems of Inventive Examples 4 and 5. TPO substrate panels which had been injection molded (DTF0808SC, The Dow Chemical Company) were thoroughly cleaned with isopropanol in an ultrasonic bath for 30 min. The adhesion promoter systems of Inventive Examples 4 and 5 were applied onto the TPO substrate using a Meyer rod to form a coated film having approximately 20 um thickness (wet film thickness) on one surface of each TPO substrate. The film was dried in an oven at 90° C for 15 minutes, and then different topcoats, as described below, were applied thereto to form a film having 50 µm thickness (wet film thickness) via a Meyer rod.

Topcoat A was melamine-based, waterborne, which was provided by Akzo Nobel under the designation of HBC Candyweiss (49-91096)

Topcoat B was melamine-based, waterborne, which was provided by Akzo Nobel under the designation of HBC Iridiumsilber (49-96016).

Topcoat C was melamine-based, waterborne, which was provided by Akzo Nobel under the designation of HBC Obsidianschwarz (49-95432).

Topcoat D was a waterborne, which was provided by PPG under the designation GM Black.

Clearcoat Systems for Topcoat A to C were hexamethylene-diisocyante derived solvent-based as provided by Akzo Nobel under the designation 2 K PUR KLARLACK (7807025D) with Hardener 8407140.

Clearcoat System for Topcoat D was a solvent-borne clearcoat system, provided by PPG under the designation DC 3010 (low VOC) and DCH 3620 low VOC hardener.

Adhesion performance of the coated specimen was determined via cross hatch test according to ASTM D 3359-09 B (0 - no adhesion, 5B - excellent) as initial adhesion and after water immersion of the crosshatched samples for 2 h, and the results are reported in Table III.

### Test Methods

Test methods include the following:
Average particle size diameter was measured by a Beckman Coulter LS230 particle size analyzer with a Small Volume Module used as the sample delivery system. The software version utilized is Version 3.29. Hardware and software can be obtained from Beckman Coulter Inc., Miami, Florida.

The analysis conditions for all measurements utilize a fluid refractive index of 1.332, a sample real refractive index of 1.5, and a sample imaginary refractive index of 0.0. The extended optical model is not employed. The polarization intensity differential scattering (PIDS) option is activated and used to generate the particle size information. The average particle size diameter is measured and reported in µm.

**Table I**

| **Dispersion** | **Base Polymer** | **Functionalized Polymer Composition** | **Stabilizer** | **Ratio Polymer/Stabilizer** | **Neutralizing base** | **Neutralization Level*** |
|---|---|---|---|---|---|---|
| Comparative Dispersion 1 | VERSIFY 4301 | --- | EMPICOL ESB | 94.2/5.8 | none | n/a |
| Comparative Disperison 2 | VERSIFY 4301 | LICOCENE 6452 | PRIMACOR 5980i | 70/7.5/22.5 | DMEA | 135% |
| Inventive Dispersion 1 | VERSIFY 4301 | BHX-10016 | EMPICOL ESB | 84.8/9.4/5.8 | none | n/a |
| Inventive Dispersion 2 | VERSIFY 4301 | BHX-10016 | PRIMACOR 5980i | 70/15/15 | DMEA | 140% |
| Inventive Dispersion 3 | VERSIFY 4301 | BHX-10016 | PRIMACOR 5980i | 80/10/10 | DMEA | 140% |
| Inventive Disperison 4 | VERSIFY 4301 | BHX-10075 | PRIMACOR 5980i | 80/10/10 | DMEA | 185% |
| Inventive Disperison 5 | VERSIFY 4301 | BHX-10075 | PRIMACOR 5980i | 80/10/10 | DMEA | 185% |
| Inventive Disperison 6 | VERSIFY 4301 | BHX-10075 | PRIMACOR 5980i | 80/5/15 | DMEA | 165% |

| | | | | | | |
|---|---|---|---|---|---|---|
| as calculated by combined acid numbers of stabilizer and functionalized polymer VERSIFY 4301 is a propylene/ethylene copolymer from The Dow Chemical Company with a melt flow rate of 25 g/10 min at 230C and a melting point of 62°C. BHX-10016 is a maleic anhydride/ polypropylene copolymer from Baker Petrolite with an acid number of 60 mg KOH /g polymer, a Mw of 2500 and a elting point of 120° C. BHX-10075 is a maleic anhydride grafted Poly(propylene-co-hexene) available from Baker Petrolite with an acid number of 100 mg KOH/g polymer, a Mw 100 and a melting point of 80° C. LICOCENE 6452 is a maleic anhydride grafted polypropylene wax available from Clariant with an acid number of 42 mg KOH /g polymer, a viscosity of 10 at 170C and a melting temperature of 140° C. PRIMACOR 5980i is an ethylene - acrylic acid copolymer available from The Dow Chemical Company with an acid number of 155 mg KOH/g polymer, a elt index of 300 g/10 min at 190C and a melting point of 77° C. EMPICOL ESB is 70% Na-Lauryl Ether Sulfate in water available from Huntsman. DMEA (dimethylethanolamine) is available from Fisher Scientific. | | | | | | |

**Table II**

| **Dispersion** | **Volume Mean µm)** | **Viscosity** (RV3, 50 RPM) (cP) | **% solids (%)** |
|---|---|---|---|
| Comparative Dispersion 1 | 1.32 | 284 | 51.1 |
| Inventive Dispersion 1 | 1.45 | 230 | 52.8 |
| Inventive Dispersion 2 | 0.59 | 372 | 44.5 |
| Inventive Dispersion 3 | 1.38 | 496 | 50.3 |
| Inventive Disperison 4 | 0.59 | 236 | 44.1 |
| Inventive Disperison 5 | 0.312 | 416 | 41.1 |
| Inventive Disperison 6 | 1.23 | 180 | 47.2 |
| Inventive Disperison 7 | 0.67 | 240 | 44 |

**Table III**

| **Dispersion Sample** | **Topcoat A** | | **Topcoat B** | | **Topcoat C** | | **Topcoat D** | |
|---|---|---|---|---|---|---|---|---|
| | **initial** | **40 h water immersion** | **initial** | **40 h water immersion** | **initial** | **40 h water immersion** | **initial** | **40 h water immersion** |
| *dilution to 35* % *solids; addition 8 % coalescent DPnB* | | | | | | | | |
| Comparative Dispersion 1 | 0B | n.d. | 0B | n.d. | 0B | n.d. | 0B | n.d. |
| Inventive Dispersion 4 | 5B | 5B | 5B | 5B | 5B | 5B | 5B | 5B |
| Inventive Dispersion 5 | 5B | 5B | 5B | 5B | 5B | 5B | 5B | 5B |
| Inventive Dispersion 6 | 5B | n.d. | 1-3B | n.d. | 1-3B | n.d. | n.d. | n.d. |
| Comparative Dispersion 2 | 0B | n.d. | 0B | n.d. | 0B | n.d. | n.d. | n.d. |

| *dilution to 35 % solids; addition 8 % coalescent TPnB* | | | | | | | | |
|---|---|---|---|---|---|---|---|---|
| Comparative Dispersion 1 | 0B | n.d. | 0B | n.d. | 0B | n.d. | 0B | n.d. |
| Inventive Dispersion 4 | 5B | 5B | 5B | 5B | 5B | 5B | 5B | 5B |
| Inventive Dispersion 5 | 5B | 5B | 5B | 5B | 5B | 5B | 5B | 5B |
| Inventive Dispersion 6 | 5B | n.d. | 1-3B | n.d. | 1-3B | n.d. | n.d. | n.d. |
| Comparative Dispersion 2 | 0B | n.d. | 0B | n.d. | 0B | n.d. | n.d. | n.d. |

| | | | | | | | | |
|---|---|---|---|---|---|---|---|---|
| *Adhesion rating: 0 - no adhesion, 5 - excellent adhesion; n.d. - not determined* | | | | | | | | |

## Claims

1. An adhesion promoter system comprising an aqueous dispersion comprising the melt kneaded product of:
at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight (a heat of fusion in the range of from 2 Joules/gram to 50 Joules/gram) as measured via DSC, and a melting point in the range of 25°C to 110°C as measured via DSC;
from 0.5 to less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition,
from 0.1 to less than 20 percent by weight of a stabilizing agent, based on the total weight of the solid content; and
in the presence of water and optionally one or more neutralizing agents; wherein said dispersion has an average particle size diameter in the range of from 0.05 to 5 µm.

2. The adhesion promoter system of claim 1, further comprising one or more fillers, one or more binders, one or more pigments, one or more rheology modifiers.

3. The adhesion promoter system of claim 1, wherein said functionalized polymer composition is obtained by a process comprising (a) reacting a propylene/hexene copolymer having a terminal unsaturation with maleic anhydride in a mole ratio of 1:1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 5 to 45 weight percent, based on the weight of functionalized polymer composition.

4. A method for producing the adhesion promoter system of claim 1, comprising the steps of:
selecting at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight (a heat of fusion in the range of from 2 Joules/gram to 50 Joules/gram) as measured via DSC, and a melting point in the range of 25°C to 110°C as measured via DSC;
selecting from 0.5 to less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition;
selecting from 0.1 to less than 20 percent by weight of a stabilizing agent, based on the total weight of the solid content;
melt kneading said base polymer and said functionalized polymer composition in the presence of water and optionally one or more neutralizing agents; and
thereby forming said adhesion promoter system.

5. An adhesion layer comprising a film derived from the adhesion promoter system of any one of claims 1-3.

6. A multilayer structure comprising:
at least one or more substrate layers;
at least one or more adhesion layers, wherein said one or more adhesion layers comprise a film derived from the adhesion promoter system of any one of claims 1-3;
at least one or more outer layers;
wherein said adhesion layer is disposed therebetween said one or more substrate layers and said one or more outer layers.

7. A process for making a multilayer structure comprising the steps:
selecting at least one or more substrate layers;
selecting the adhesion promoter system of any one of claims 1-3;
applying said adhesion promoter system to at least one surface of said substrate layer;
removing at least a portion of the water;
thereby forming an adhesion layer associated with said substrate layer;
forming at least one or more outer layers on said adhesion layer; and
thereby forming a multilayer structure.

8. A coating composition comprising the adhesion promoter system of claim 1, wherein said coating composition comprises at least 1 percent by weight of the adhesion promoter system.

9. A multilayer structure comprising:
at least one or more substrate layers;
at least one or more coating layers, wherein said one or more coating layers comprises a film derived from a formulated composition comprising the adhesion promoter system of claim 1 and optionally other components and additives.

## Patentansprüche

1. Ein Haftvermittlersystem, beinhaltend eine wässrige Dispersion, beinhaltend das Schmelzknetprodukt aus:
zu mindestens 60 Gewichtsprozent, bezogen auf das Gesamtgewicht des Feststoffgehalts, einem Basispolymer, wobei das Basispolymer eine Propylen/Ethylen-Copolymerzusammensetzung beinhaltet, wobei das Propylen/Ethylen-Copolymer eine Kristallinität in dem Bereich von 1 Gewichtsprozent bis 30 Gewichtsprozent (eine Schmelzwärme in dem Bereich von 2 Joule/Gramm bis 50 Joule/Gramm), wie mittels DSC gemessen, und einen Schmelzpunkt in dem Bereich von 25 °C bis 110 °C, wie mittels DSC gemessen, aufweist;
zu 0,5 bis weniger als 40 Gewichtsprozent, bezogen auf das Gesamtgewicht des Feststoffgehalts, einer Zusammensetzung funktionalisierten Polymers, wobei die Zusammensetzung funktionalisierten Polymers Folgendes beinhaltet: Homopolymere von Propylen oder Copolymere von Propylen mit Hexen, Octen und/oder anderen ähnlichen alpha-Olefinen, wobei die Homopolymere oder Copolymere eine einzelne Ungesättigtheit, einen terminalen Bernsteinsäureanhydridanteil und zusätzliche Bernsteinsäureanhydridsubstitutionen an der Polypropylenhauptkette aufweisen, wobei die Bernsteinsäureanhydridsubstitution im Bereich von etwa 5 bis etwa 45 Gewichtsprozent der Zusammensetzung funktionalisierten Polymers liegt;
zu 0,1 bis weniger als 20 Gewichtsprozent, bezogen auf das Gesamtgewicht des Feststoffgehalts, einem Stabilisierungsmittel; und
in Gegenwart von Wasser und optional einem oder mehreren Neutralisierungsmitteln; wobei die Dispersion einen durchschnittlichen Partikelgrößendurchmesser in dem Bereich von 0,05 bis 5 µm aufweist.

2. Haftvermittlersystem gemäß Anspruch 1, das ferner einen oder mehrere Füllstoffe, ein oder mehrere Bindemittel, ein oder mehrere Pigmente, ein oder mehrere Rheologiemodifikationsmittel beinhaltet.

3. Haftvermittlersystem gemäß Anspruch 1, wobei die Zusammensetzung funktionalisierten Polymers durch einen Prozess erhalten wird, der Folgendes beinhaltet: (a) Reagierenlassen eines Propylen/Hexen-Copolymers, das eine terminale Ungesättigtheit aufweist, mit Maleinsäureanhydrid in einem Molverhältnis von 1 : 1 zum Herstellen von terminal mit Bernsteinsäureanhydrid funktionalisiertem Propylen/Hexen-Copolymer, das einen terminalen Bernsteinsäureanhydridanteil und eine einzelne Ungesättigtheit aufweist, und dann (b) Reagierenlassen des terminal mit Bernsteinsäureanhydrid funktionalisierten Propylen/Hexen-Copolymers, das einen terminalen Bernsteinsäureanhydridanteil und eine einzelne Ungesättigtheit aufweist, mit zusätzlichem Maleinsäureanhydrid in Gegenwart von Radikalinitiierung zum Herstellen der Zusammensetzung funktionalisierten Polymers, wobei die Zusammensetzung funktionalisierten Polymers eine Bernsteinsäureanhydridsubstitution im Bereich von 5 bis 45 Gewichtsprozent, bezogen auf das Gewicht der Zusammensetzung funktionalisierten Polymers, aufweist.

4. Ein Verfahren zum Herstellen des Haftvermittlersystems gemäß Anspruch 1, das die folgenden Schritte beinhaltet:
Auswählen von zu mindestens 60 Gewichtsprozent, bezogen auf das Gesamtgewicht des Feststoffgehalts, einem Basispolymer, wobei das Basispolymer eine Propylen/Ethylen-Copolymerzusammensetzung beinhaltet, wobei das Propylen/Ethylen-Copolymer eine Kristallinität in dem Bereich von 1 Gewichtsprozent bis 30 Gewichtsprozent (eine Schmelzwärme in dem Bereich von 2 Joule/Gramm bis 50 Joule/Gramm), wie mittels DSC gemessen, und einen Schmelzpunkt in dem Bereich von 25 °C bis 110 °C, wie mittels DSC gemessen, aufweist;
Auswählen von zu 0,5 bis weniger als 40 Gewichtsprozent, bezogen auf das Gesamtgewicht des Feststoffgehalts, einer Zusammensetzung funktionalisierten Polymers, wobei die Zusammensetzung funktionalisierten Polymers Folgendes beinhaltet: Homopolymere von Propylen oder Copolymere von Propylen mit Hexen, Octen und/oder anderen ähnlichen alpha-Olefinen, wobei die Homopolymere oder Copolymere eine einzelne Ungesättigtheit, einen terminalen Bernsteinsäureanhydridanteil und zusätzliche Bernsteinsäureanhydridsubstitutionen an der Polypropylenhauptkette aufweisen, wobei die Bernsteinsäureanhydridsubstitution im Bereich von etwa 5 bis etwa 45 Gewichtsprozent der Zusammensetzung funktionalisierten Polymers liegt;
Auswählen von zu 0,1 bis weniger als 20 Gewichtsprozent, bezogen auf das Gesamtgewicht des Feststoffgehalts, einem Stabilisierungsmittel;
Schmelzkneten des Basispolymers und der Zusammensetzung funktionalisierten Polymers in Gegenwart von Wasser und optional einem oder mehreren Neutralisierungsmitteln; und
dadurch Bilden des Haftvermittlersystems.

5. Eine Haftschicht, die einen Film, hergeleitet von dem Haftvermittlersystem gemäß einem der Ansprüche 1-3, beinhaltet.

6. Eine Mehrschichtstruktur, die Folgendes beinhaltet:
mindestens eine oder mehrere Substratschichten;
mindestens eine oder mehrere Haftschichten, wobei die eine oder die mehreren Haftschichten einen Film, hergeleitet von dem Haftvermittlersystem gemäß einem der Ansprüche 1-3, beinhalten;
mindestens eine oder mehrere äußere Schichten;
wobei die Haftschicht zwischen der einen oder den mehreren Substratschichten und der einen oder den mehreren äußeren Schichten angeordnet ist.

7. Ein Prozess zum Anfertigen einer Mehrschichtstruktur, der die folgenden Schritte beinhaltet:
Auswählen mindestens einer oder mehrerer Substratschichten;
Auswählen des Haftvermittlersystems gemäß einem der Ansprüche 1-3;
Auftragen des Haftvermittlersystems auf mindestens eine Oberfläche der Substratschicht;
Entfernen von mindestens einem Teil des Wassers;
dadurch Bilden einer mit der Substratschicht verbundenen Haftschicht;
Bilden mindestens einer oder mehrerer äußerer Schichten auf der Haftschicht; und
dadurch Bilden einer Mehrschichtstruktur.

8. Eine Beschichtungszusammensetzung, die das Haftvermittlersystem gemäß Anspruch 1 beinhaltet, wobei die Beschichtungszusammensetzung zu mindestens 1 Gewichtsprozent das Haftvermittlersystem beinhaltet.

9. Eine Mehrschichtstruktur, die Folgendes beinhaltet:
mindestens eine oder mehrere Substratschichten;
mindestens eine oder mehrere Beschichtungsschichten, wobei die eine oder die mehreren Beschichtungsschichten einen Film beinhalten, hergeleitet von einer formulierten Zusammensetzung, die das Haftvermittlersystem gemäß Anspruch 1 und optional weitere Komponenten und Zusatzstoffe beinhaltet.

## Revendications

1. Un système promoteur d'adhésion comprenant une dispersion aqueuse comprenant le produit malaxé à l'état fondu :
d'au moins 60 pour cent en poids d'un polymère de base, rapporté au poids total de la teneur en matières solides, dans lequel ledit polymère de base comprend une composition de copolymère de propylène/éthylène, dans lequel ledit copolymère de propylène/éthylène a une cristallinité comprise dans la gamme allant de 1 pour cent en poids à 30 pour cent en poids (une chaleur de fusion comprise dans la gamme allant de 2 Joules/gramme à 50 Joules/gramme) telle que mesurée par l'intermédiaire d'une DSC, et un point de fusion compris dans la gamme de 25 °C à 110 °C tel que mesuré par l'intermédiaire d'une DSC ;
de 0,5 à moins de 40 pour cent en poids d'une composition de polymère fonctionnalisé, rapporté au poids total de la teneur en matières solides, dans lequel ladite composition de polymère fonctionnalisé comprend des homopolymères de propylène ou des copolymères de propylène avec de l'hexène, de l'octène et/ou d'autres alpha-oléfines analogues, les homopolymères ou copolymères ayant une unique insaturation, un groupement terminal anhydride succinique, et des substitutions anhydride succinique supplémentaires sur le squelette polypropylène, où la substitution anhydride succinique est comprise dans la gamme allant d'environ 5 à environ 45 pour cent en poids de la composition de polymère fonctionnalisé,
de 0,1 à moins de 20 pour cent en poids d'un agent stabilisant, rapporté au poids total de la teneur en matières solides ; et
en présence d'eau et facultativement d'un ou de plusieurs agents de neutralisation ;
dans lequel ladite dispersion a un diamètre moyen de taille de particule compris dans la gamme allant de 0,05 à 5 µm.

2. Le système promoteur d'adhésion de la revendication 1, comprenant en outre une ou plusieurs charges, un ou plusieurs liants, un ou plusieurs pigments, un ou plusieurs modificateurs de rhéologie.

3. Le système promoteur d'adhésion de la revendication 1, dans lequel ladite composition de polymère fonctionnalisé est obtenue par un procédé comprenant (a) le fait de faire réagir un copolymère de propylène/hexène ayant une insaturation terminale avec de l'anhydride maléique dans un rapport molaire de 1/1 afin de produire du copolymère de propylène/hexène fonctionnalisé en position terminale par de l'anhydride succinique ayant un groupement terminal anhydride succinique et une unique insaturation, et ensuite (b) le fait de faire réagir le copolymère de propylène/hexène fonctionnalisé en position terminale par de l'anhydride succinique ayant un groupement terminal anhydride succinique et une unique insaturation avec de l'anhydride maléique supplémentaire en présence d'une initiation radicalaire afin de produire ladite composition de polymère fonctionnalisé, dans lequel ladite composition de polymère fonctionnalisé a une substitution anhydride succinique comprise dans la gamme allant de 5 à 45 pour cent en poids, rapporté au poids de la composition de polymère fonctionnalisé.

4. Une méthode pour produire le système promoteur d'adhésion de la revendication 1, comprenant les étapes consistant à :
sélectionner au moins 60 pour cent en poids d'un polymère de base, rapporté au poids total de la teneur en matières solides, dans laquelle ledit polymère de base comprend une composition de copolymère de propylène/éthylène, dans laquelle ledit copolymère de propylène/éthylène a une cristallinité comprise dans la gamme allant de 1 pour cent en poids à 30 pour cent en poids (une chaleur de fusion comprise dans la gamme allant de 2 Joules/gramme à 50 Joules/gramme) telle que mesurée par l'intermédiaire d'une DSC, et un point de fusion compris dans la gamme de 25 °C à 110 °C tel que mesuré par l'intermédiaire d'une DSC ;
sélectionner de 0,5 à moins de 40 pour cent en poids d'une composition de polymère fonctionnalisé, rapporté au poids total de la teneur en matières solides, dans laquelle ladite composition de polymère fonctionnalisé comprend des homopolymères de propylène ou des copolymères de propylène avec de l'hexène, de l'octène et/ou d'autres alpha-oléfines analogues, les homopolymères ou copolymères ayant une unique insaturation, un groupement terminal anhydride succinique, et des substitutions anhydride succinique supplémentaires sur le squelette polypropylène, où la substitution anhydride succinique est comprise dans la gamme allant d'environ 5 à environ 45 pour cent en poids de la composition de polymère fonctionnalisé ;
sélectionner de 0,1 à moins de 20 pour cent en poids d'un agent stabilisant, rapporté au poids total de la teneur en matières solides ;
malaxer à l'état fondu ledit polymère de base et ladite composition de polymère fonctionnalisé en présence d'eau et facultativement d'un ou de plusieurs agents de neutralisation ; et
former de ce fait ledit système promoteur d'adhésion.

5. Une couche d'adhésion comprenant un film dérivé du système promoteur d'adhésion de n'importe laquelle des revendications 1 à 3.

6. Une structure multicouche comprenant :
au moins une ou plusieurs couches de substrat ;
au moins une ou plusieurs couches d'adhésion, lesdites une ou plusieurs couches d'adhésion comprenant un film dérivé du système promoteur d'adhésion de n'importe laquelle des revendications 1 à 3 ;
au moins une ou plusieurs couches externes ;
dans laquelle ladite couche d'adhésion est disposée entre lesdites une ou plusieurs couches de substrat et lesdites une ou plusieurs couches externes.

7. Un procédé pour réaliser une structure multicouche comprenant les étapes consistant à :
sélectionner au moins une ou plusieurs couches de substrat ;
sélectionner le système promoteur d'adhésion de n'importe laquelle des revendications 1 à 3 ;
appliquer ledit système promoteur d'adhésion sur au moins une surface de ladite couche de substrat ;
retirer au moins une portion de l'eau ;
former de ce fait une couche d'adhésion associée à ladite couche de substrat ;
former au moins une ou plusieurs couches externes sur ladite couche d'adhésion ; et
former de ce fait une structure multicouche.

8. Une composition de revêtement comprenant le système promoteur d'adhésion de la revendication 1, ladite composition de revêtement comprenant au moins 1 pour cent en poids du système promoteur d'adhésion.

9. Une structure multicouche comprenant :
au moins une ou plusieurs couches de substrat ;
au moins une ou plusieurs couches de revêtement, lesdites une ou plusieurs couches de revêtement comprenant un film dérivé d'une composition formulée comprenant le système promoteur d'adhésion de la revendication 1 et facultativement d'autres constituants et additifs.
